## Europäisches Patentamt
## European Patent Office
## Office européen des brevets

(11) Numéro de publication: **0 030 491**
**B1**

(12) **FASCICULE DE BREVET EUROPEEN**

(45) Date de publication du fascicule du brevet: **02.05.85**

(21) Numéro de dépôt: **80401686.3**

(22) Date de dépôt: **26.11.80**

(51) Int. Cl.⁴: **F 02 P 5/04**

(54) Correcteur électronique d'angle d'avance à l'allumage en fonction du cliquetis.

(30) Priorité: **10.12.79 FR 7930179**

(43) Date de publication de la demande:
**17.06.81 Bulletin 81/24**

(45) Mention de la délivrance du brevet:
**02.05.85 Bulletin 85/18**

(84) Etats contractants désignés:
**DE GB IT SE**

(56) Documents cités:
**EP-A-0 022 159**
**FR-A-2 429 904**
**GB-A-2 030 644**
**US-A-4 002 155**

(73) Titulaire: **REGIE NATIONALE DES USINES RENAULT**
**Boîte postale 103 8-10 avenue Emile Zola**
**F-92109 Boulogne-Billancourt (FR)**

(72) Inventeur: **Deleris, Robert**
**36 Square des Marronniers**
**F-78870 Bailly (FR)**

(74) Mandataire: **Jacques, Max et al**
**RNUR - S. 0804 BP 103**
**F-92109 Boulogne-Billancourt (FR)**

Courier Press, Leamington Spa, England.

## Description

La présente invention est relative à un correcteur électronique d'angle d'avance à l'allumage d'un moteur thermique à combustion interne à allumage commandé en fonction du cliquetis du moteur.

L'amélioration du cycle de combustion a toujours préoccupé le motoriste et a été l'un des éléments directeurs de la modification de l'architecture des chambres de combution et de l'augmentation du taux de compression. En effet, ce dernier paramètre conditionne directement le rendement thermodynamique du moteur. Malheureusement, l'augmentation du taux de compression déplace la zône d'apparition du cliquetis vers le maximum de la courbe du couple appliqué au moteur en fonction de l'angle d'avance à l'allumage et, si l'on continue à augmenter le taux de compression du moteur, la garde de protection d'avance par rapport au cliquetis conduit à faire fonctionner le moteur avec des caractéristiques qui le pénalisent plus qu'avec un taux de compression plus faible. Néanmoins, il peut être intéressant d'utiliser des moteurs à haut taux de compression notamment pour améliorer le rendement de combution dans les charges patielles. Dans ce but, si l'on veut conserver un moteur ayant des performences acceptables en accélération, il convient de ne pas le pénaliser dans ses phases transitoires et de le protéger de l'apparition de cliquetis dans son fonctionnement en phase stabilisée.

Divers dispositifs de protection d'un moteur vis-à-vis du cliquetis sont connus du technicien. Ils agissent soit sur l'augmentation de la richesse du mélange, soit sur la diminution de l'avance à l'allumage. La première solution est réalisée implicitement dans le dispositif de dosage de carburant par l'intermédiaire de pompe de reprise qui einrichit le mélange dans les phases d'accélération et avec les dispositifs d'automaticité du carburateur agissant au voisinage de la pleine charge et qui enrichissent également le mélange; la seconde solution n'est vraiment efficace avec les dispositifs actuels que lorsque le moteur fonctionne en régime stabilisé.

La méthode la plus efficace pour mesurer et détecter l'apparition du cliquetis est l'analyse des signaux de pression dans les chambres de combustion. Cette solution est coûteuse par le type des capteurs qu'elle nécessite et par leur nombre: un par cylindre. On préfère donc analyser les vibrations de la culasse du moteur au moyen d'un accéléromètre de type sismique. Le signal de l'accéléromètre est traité par un filtre passe-bande centré sur la fréquence de résonance de la chabre de combustion de façon à éliminer au maximum les bruits situés en dehors de la bande de résonance de la chambre de combustion.

Un redressement simple ou double alternance permet de transformer le signal alternatif en signal continu. L'examen de ce signal montre une partie due au bruit de combustion d'amplitude variable en fonction de la vitesse de rotation du moteur et de l'angle d'avance à allumage aux environs du maximum de la pression dans un cylindre et une partie d'amplitude variable en fonction de la vitesse de rotation du moteur correspondant à l'excitation de la culasse par les soupapes. L'intégration du signal de l'accéléromètre, filtré et redressé dans une fenêtre angulaire centrée aux environs du maximum de pression dans le cylindre, permet d'accroître la dynamique de la measure et de n'effectuer l'analyse que dans une zône où le cliquetis est possible. Une fenêtre débutant au point mort hat (P.M.H.) de chaque cylindre et durant entre 30 et 40 degrés de rotation de vilebrequin donne des résultats acceptables sur tous les types de moteurs utilisés. A partir du signal intégré et après comparaison avec un seuil prédéterminé, on peut détecter électroniquement la présence de cliquetis. Le FR—A—2 404 121 décrit une telle méthode de détection du cliquetis pour le règlage automatique de l'avance à l'allumage d'un moteur à combustion interne.

Avec une telle méthode, on ne peut supprimer totalement le cliquetis dont il subsiste toujours un petit nombre de coups. Le nombre peut diminuer lorsqu'on augmente le temps de retour à l'avance nominale, mais alors on reste plus longtemps dans une zône où le rendement est plus faible.

Pour éviter ces inconvénient, la EP—A—18 858 décrit un procédé de calcul et de règlage de l'optmalisation de l'avance à l'allumage d'un moteur à combustion interne au moyen d'un système de détection du cliquetis à l'aide d'un capteur tel qu'un accéléromètre rigidement fixé sur la culasse du moteur, procédé remarquable en ce que l'on fait subir un traitement analogique au signal accéléromètrique comportant notamment l'intégration du signal à l'intérieur d'une fenêtre déterminée; on convertit le signal résultant sous forme numérique; on calcule une valeur moyenne C proportionnelle aux x coups de cliquetis précédentes; on calcule deux seuils de comparaison $S_1$ et $S_2$ qui sont chacun une fonction linéaire de la valeur moyenne C calculée précédemment; on compare la valeur accéléromètrique intégrée sous forme numérique à chacun de ces seuils et l'on en déduit l'existence ou l'absence d'une valeur de précliquetis et/ou de cliquetis audibles que l'on utilise ensuite pour agir sur l'avance programmée de l'allumage électronique.

Dans la même demande de brevet et suivant un second aspect de l'invention on a décrit et revendiqué en système de calcul et de règlage de l'optimalisation de l'avance à l'allumage d'un moteur à combustion interne au moyen d'un système de détection du cliquetis à partir d'un capteur tel qu'un accéléromètre rigidement fixé sur la culasse du moteur, système remarquable en ce qu'il comprend des moyens de traitements analogiques du signal prélevé sur l'accéléromètre, ces moyens comportant notamment un intégrateur, des moyens logiques de commande de l'intégrateur, un convertisseur analogique-numérique et un micro-calculateur comportant notamment un séquenceur, un étage de calcul d'une valeur moyenne C proportionnelle aux x coups de cliquetis précédents, deux étages de calcul de seuils de comparaison $(S_1, S_2)$ qui sont chacun une fonction linéaire de la valeur moyenne C calculée précédemment et des moyens pour en déduire l'existence ou l'absence d'une valeur de précliquetis et/ou de cliquetis audibles.

Avec cette méthode, le stockage de x valeurs élémentaires correspondant aux x allumages précédents occupe beaucoup de place dans la mémoire du calculateur. L'invention vise à éliminer cet inconvénient au moyen d'un procédé mettant en oeuvre la méthode connue d'intégration du signal accélérométrique dans une fenêtre angulaire de longueur déterminée.

A cette effet, l'invention a pour objet un procédé de correction électronique de l'angle d'avance à l'allumage d'un moteur à combustion interne au moyen de la détection de signaux de bruit de combustion à l'aide d'un capteur tel qu'un accéléromètre rigidement fixé à la culasse du moteur, suivant lequel on fait subir au signal accélérométrique un traitement analogique comportant notamment l'intégration dans une fenêtre angulaire de mesure de largeur déterminée pour en déduire une valeur Ai du signal de bruit intégré dans ladite fenêtre de mesure, caractérisé en ce qu'on calcule, pour chaque cylindre, une valeur moyenne $\overline{S}_n$ de bruit intégré du moteur à partir des valeurs de bruit Ai relatives au cylindre considéré, ladite valeur moyenne $\overline{S}_n$ de bruit intégré étant constamment réactualisée par la dernière prélevée, suivant la formule:

$$\overline{S}_n = \overline{S_{n-1}} + \frac{A_I - \overline{S_{n-1}}}{k} \qquad (1)$$

dans laquelle $\overline{S_{n-1}}$ est la valeur moyenne précédente; $A_I$ est la dernière valeur prélevée du bruit intégré; $k$ est un coefficient de filtrage numérique de réactualisation de la valeur moyenne;
on définit pour le cylindre considéré un seuil de détection de cliquetis C par la formule:

$$C = k_3 \cdot \overline{S_{n-1}} + k_2$$

dans laquelle: $k_3$ est un coefficient multiplicateur et $k_2$ une valeur de décalage;
on compare la dernière valeur de bruit intégré $A_i$ au seuil de détection de cliquetis C défini à partir de la valeur $\overline{S_{n-1}}$ relative au cylindre considéré, on corrige, en fonction du résultat de la comparaison précédente, le point d'avance à l'allumage du cylindre considéré,
on prend pour le coefficient $k$ dans la formule (i) une valeur comprise entre 4 et 10 lorsque la dernière valeur $A_i$ est inférieure à la valeur moyenne $\overline{S_{n-1}}$,
on prend $k$ égal à 2 ou 3 dans la formule (1) lorsque la dernière valeur $A_i$ est comprise entre la

valeur moyenne $\overline{S_{n-1}}$ et le seuil de détection de cliquetis C,
et l'on s'abstient de calculer une nouvelle valeur moyenne $\overline{S}_n$ lorsque la dernière valeur $A_i$ est supérieure au seul de détection de cliquetis C.

Suivant ce procédé, les cylindres sont traités successivement un par un pour la détection et la valeur moyenne $\overline{S}_n$ est calculée à partir des données relatives à un cylindre déterminé à un instant donné. On a donc un seuil de détection variable en fonction de la valeur moyenne du signal intégré, cylindre par cylindre. Ceci permet de tenir compte des dispersions de sensibilité du capteur utilisé, du gain de l'électronique de traitement, du bruit propre à un même type de moteur, de la transmission des bruits au-travers de la culasse, de la position de l'accéléromètre sur la culasse du moteur et du niveau de bruit propre à chaque cylindre. Tout mode de génération de la fenêtre peut être utilisé tel que boucle P.L.L. à verrouillage de phase synchronisée sur un signal de P.M.H., codeur optique, ou génération à partir de l'allumage électronique associé à la présente invention comme elle est réalisée.

Suivant une autre caractéristique, on détermine si le moteur est en phase d'accélération, en phase de décélération, en régime stabilié à pleine charge ou en régime stabilisé à charge partielle, et

— lors de la détection de cliquetis, on augmente la valeur de décalage du point d'avance à l'allumage:
. d'une première valeur en phase d'accélération,
. d'une deuxième valeur inférieure à la première en régime stabilisé à charge partielle,
. d'une troisième valeur inférieure à la deuxième en régime stabilisé à pleine charge,
— on procède à un écrêtage de la valeur de décalage qui ne peut dépasser une valeur maximale,
— en l'absence de détection de cliquetis, on diminue la valeur de décalage du point d'avance à l'allumage:
. d'une première valeur en phase d'accélération,
. d'une deuxième valeur inférieure à la première en régime stabilisé à charge partielle,
. d'une troisième valeur inférieure à la deuxième en régime stabilisé à pleine charge,
— et l'on remet à zéro la valeur de décalage dans les phases de décélération. Suivant cette caractéristique, on tient compte d'informations relatives à la charge du moteur pour déterminer les stratégies de décalage de l'avance à l'allumage. Dans les phases de fonctionnement stabilisé du moteur, l'apparition de signaux de cliquetis est le résultat d'un déplacement de la limite du cliquetis sous l'influence de paramètres qui n-ont pas été pris en compte lors de la programmation de la loi d'avance. Il convient donc de décaler le point d'avance de façon à supprimer le cliquetis sans trop dés adapter le moteur; ce décalage diminue progressivement en fonction du nombre d'allumages en vue de revenir à la loi de base programmée. Dans les phases de fonctionnement transitoire du moteur, notamment en période d'accélération, l'apparition de signaux de cliquetis est le résultat d'une désadaptation de la richesse du mélange ou d'un temps de réponse trop long du dispositif d'allumage. Il faut donc décaler d'une valeur plus importante que précédemment le point d'avance d'allumage de façon à faire disparaître les signaux de cliquetis. De plus, la diminution de ce décalage en fonction du nombre d'allumages pour revenir à la loi programmée doit être plus importante que dans le cas du fonctionnement précédent. Dans les phases de décélération pendant lesquelles l'apparition de signaux de cliquetis est quasi nulle, le dispositif doit être prévu pour remettre les dispositifs de décalage à zéro.

Suivant une autre caractéristique, pour déterminer l'état de fonctionnement du moteur, on mesure et on mémorise la pression dans le collecteur d'admission à chaque cycle, on effectue une différenciation par rapport à la valeur mémorisée au cycle précédent, on en déduit que l'on est en accélération si la dérivée est positive, un décélération si la dérivée est négative et en régime stabilisé si la dérivée est nulle, on compare la valeur mesurée de la pression à un seuil fixe et l'on déduit que l'on est en fonctionnement à pleine charge ou en charge partielle en fonction du résultat de ladite comparaison.

Suivant une autre caractéristique, lors de la détection de cliquetis, on augmente la valeur de décalage de tous les cylindres en phase d'accélération et du seul cylindre considéré en régime stabilisé.

Suivant une autre caractéristique, on déclenche une temporisation lors de chaque accélération, qui bloque la remise à zéro des valeurs de décalage lors des phases de décélération suivant immédiatement une phase d'accélération. On anticipe ainsi le décalage lors de deux ou de plusieurs accélérations rapprochées, séparées par des décélérations, phénomène survenant, par exemple, lors d'un changement de rapports de boîte de vitesses.

L'invention a également pour objet un correcteur électronique d'angle d'avance à l'allumage spécialement conçu pour la mise en oeuvre du procédé défini ci-dessus, comportant un capteur tel qu'un accéléromètre fixé rigidement à la culasse du moteur, des moyens de traitement analogique du signal prélevé sur l'accéléromètre, ces moyens de traitement anlogique comprenant un intégrateur recevant le signal accélérométrique, un circuit générateur d'une valeur de seuil et un comparateur de niveau de tension, ledit correcteur comprenant en outre des moyens logiques pour commander le fonctionnement de l'intégrateur à l'intérieur d'une fenêtre angulaire de mesure, et un microcalculateur qui calcule la valeur de décalage de l'angle d'avance à l'allumage en fonction de l'état de sortie du comparateur, caractérisé en ce que l'intégrateur comprend une capacité d'intégration dans laquelle est mémorisé le signal de bruit détecté à partir de l'accéléromètre et qui est ensuite déchargée par un système à courant constant, et en ce que le microcalculateur comprend un oscillateur interne, un compteur qui comptabilise les impulsions émises par l'oscillateur interne durant le temps où la valeur de charge de la capacité est supérieure à la valeur de seuil engendrée par le circuit, le contenu dudit compteur étant représentatif de la valeur $A_i$ du signal intégré dans la fenêtre de mesure, un étage de calcul de la valeur moyenne de bruit intégré $\overline{S}_n$; un étage de calcul du seuil de détection de cliquetis $C$, un étage de calcul de la valeur de correction de décalage de l'angle d'avance à l'allumage, un étage de mémorisation de la valeur de correction de décalage et un étage de sortie recevant les valeurs successives de correction de décalage calculées par le microcalculateur, et en ce que le compteur est relié soit à un capteur de pression, soit à l'oscillateur interne par un ensemble de portes logiques à fonction ET et OU.

D'autres caractéristiques ressortiront de la description qui suit et qui n'est donnée qu'à titre d'exemple. A cet effet, on se reportera au dessin joint dans lequel:

— la figure 1 représente, sous forme de schéma-bloc, l'architecture générale du circuit électronique suivant l'invention,
— la figure 2 est un organigramme illustrant le fonctionnement de la logique de commande du microcalculateur,
— la figure 3 est un organigramme illustrant le fonctionnement de l'étage de calcul de la valeur moyenne de bruit à l'intérieur du microcalculateur,
— la figure 4 est un organigramme illustrant le fonctionnement de l'étage de calcul de la valeur de seuil de cliquetis à l'intérieur du microcalculateur,
— la figure 5 est un organigramme illustrant la programmation du microcalculateur appliquant une stratégie d'où résulte le calcul de la valeur de décalage de l'angle d'avance à l'allumage en fonction de la pression et du cliquetis, et,
— la figure 6 illustre un mode de réalisation de l'étage de sortie du microcalculateur dialoguant avec le calculateur principal de valeur d'avance à l'allumage.

Les mêmes référence désignent les mêmes élements sur les différentes figures.

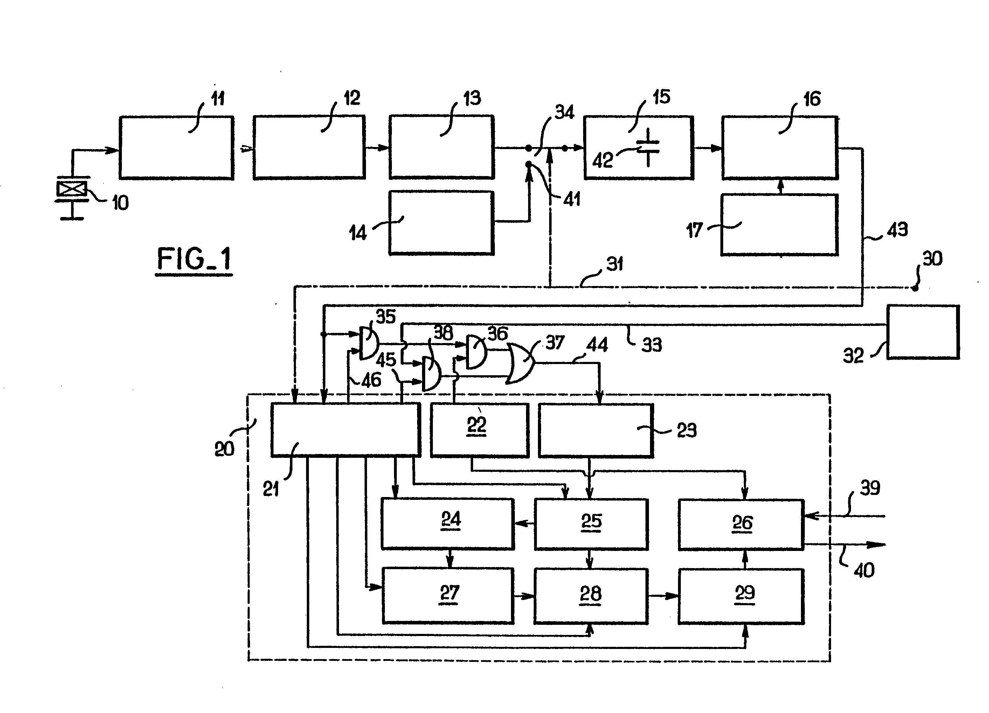

A la figure 1, à laquelle on se réfère d'abord, un accéléromètre 10 de nature piézoélectrique vissé sur la culasse d'un moteur à combustion interne, qui n'a pas été représenté, en un endroit approprié, est relié par sa sortie à un amplificateur de charge 11 connecté lui-même à un filtre passe-bande 12 actif par exemple dans la bande de fréquences de 6 à 9 kHz. La sortie du filtre passe-bande 12 est reliée en entrée à un redresseur 13 relié à un intégrateur 15 par l'intermédiaire d'un commutateur 34 dont une seconde borne d'entrée 41 est reliée à un générateur de courant constant 14 en vue de pouvoir décharger à courant constant un condensateur 42 situé dans l'intégrateur 15 qui s'est chargé avec le signal issu de l'accéléromètre 10 après que ce dernier ait été amplifié, filtré redressé et intégré pendant le passage d'une fenêtre de mesure dont la durée est commandée à partir du point 30 par un conducteur 31 agissant sur la position du bras mobile du commutateur 34. L'intégrateur 15 est relié par sa sortie à la première entrée d'un comparateur 16 recevant sur sa seconde entrée une valeur de seuil de comparaison établie dans un circuit 17. La sortie du comparateur 16 est reliée par un conducteur 43, d'une part, à une entrée d'une logique de commande 21 située à l'intérieur d'un microcalculateur 20 qui est, par exemple, du type 8048 de la firme américaine "INTEL", d'autre part, à une première entrée d'une porte logique 35 à fonction ET reliée par une seconde entrée 46 à une sortie de la logique de commande 21. Le microcalculateur 20 comprend, en outre, les étages suivants: un oscillateur interne 22 et un compteur 23, un étage de calcul 24 de la valeur moyenne de bruit, un étage 27 de calcul du seuil de détection de cliquetis, un étage 28 de calcul de la valeur du signal de décalage de l'avance à l'allumage, une mémoire de données 25, un étage de sortie 26 de la valeur du décalage et une mémoire 29 de la valeur de décalage. La logique de commande 21 est connectée par une seconde entrée au conducteur 31 de commande de la position du commutateur 34 et par ses sorties aux étages de calcul 24, 27 et 28 aux mémoires 25 et 29 et par un conducteur 45 à une entrée d'une seconde porte logique 38 à fonction ET reliée par sa seconde entrée et un conducteur 33 à un capteur de pression 32 qui mesure la pression dans le collecteur d'admission du moteur. L'oscillateur interne 22 est connecté par une première sortie à l'étage de sortie 26 de la valeur de décalage et par une seconde sortie à la première entrée d'une troisième porte logique 36 à fonction ET connectée par sa seconde entrée à la sortie de la première porte logique 35 à fonction ET et par sa sortie à la première entrée d'une porte logique 37 à fonction OU connectée par sa seconde entrée à la sortie de la seconde porte logique 38 à fonction ET et par sa sortie 44 à une entrée du compteur 23 qui est relié par sa sortie à la mémoire de données 25. La mémoire de données 25 est en communication avec l'étage de calcul de la valeur moyenne de bruit 24 et avec l'étage de calcul de la valeur de décalage 28, ce dernier en liaison par une entrée avec l'étage de calcul du seuil de détection de cliquetis 27 et par une sortie à la mémoire de la valeur de décalage 29, cette dernière en relation par une sortie avec l'étage de sortie 26 de la valeur de décalage. Ce dernier étage de sortie 26 à la réception d'un signal "envoi", transmis sur un conducteur 39, transmet sur son conducteur de sortie 40 un nombre d'impulsions égal à la valeur de décalage calculée en direction du calculateur central de valeur d'angle d'avance à l'allumage.

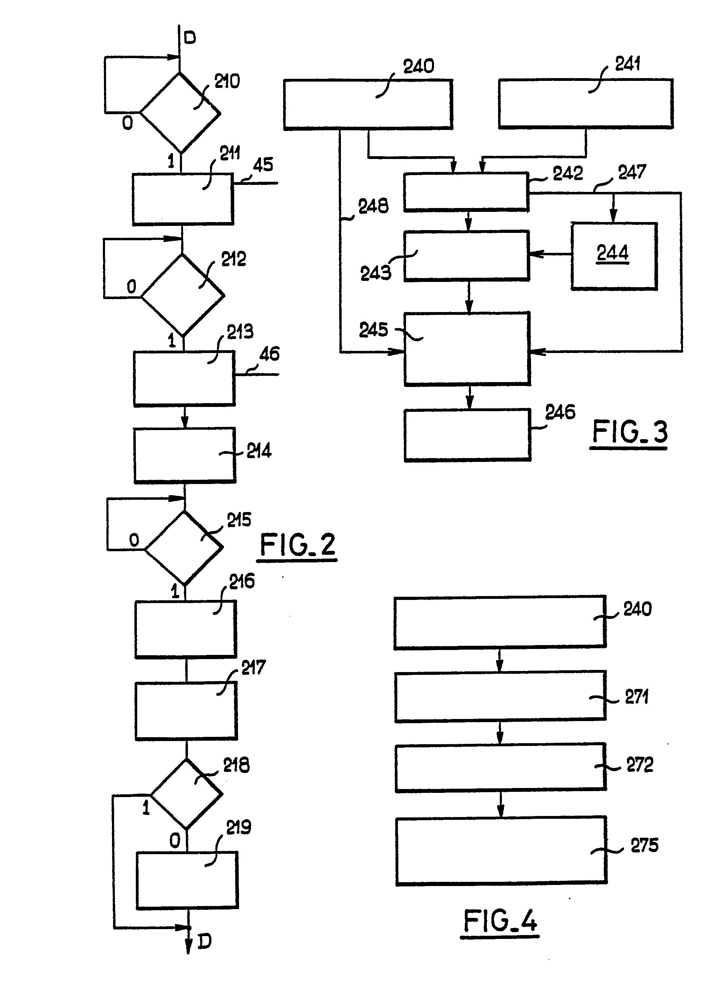

Le fonctionnement de l'unité logique de commande 21 située à l'intérieur du microcalculateur 20 va maintenant être décrit à l'aide d'un exemple de réalisation illustré par l'organigramme de la figure 2.

D'une manière générale, le début de l'organigramme est référencé D; une flèche accompagnée d'une telle lettre, comme c'est le cas au bas de la figure 2, signifie un retour au début de l'organigramme. Comme cela est habituel en logique programmée, les différents tests de branchement réalisés par des organes comparateurs sont repérés sous la forme de losange à diagonale verticale, tandis que les opérations sont repérées sous la forme de rectangles. Le résultat des tests est repéré 1 dans le cas où il est positif et 0 dans le cas où il est négatif et détermine les différentes voies de branchement.

Lors d'une première étape 210, le système est dans l'attente du début de la fenêtre de mesure, communiqué par le conducteur 31 de la figure 1. Quand le signal correspondant a été reçu, on passe à l'étape 211 au cours de laquelle on mesure la pression d'air dans le collecteur d'admission. A cet effet par le conducteur 45 sortant de la logique de commande 21 de la figure 1, on autorise les impulsions délivrées par le capteur de pression 32 à être comptabilisées dans le compteur 23 après passage du signal dans les portes logiques 38 et 37 pendant un temps déterminé. Le compteur 23 travaille en fréquencemètre de façon à obtenir une valeur numérique qui traduise la pression de l'air dans le collecteur d'admission. La fenêtre de mesure de cliquetis est placée juste après le P.M.H. et dure par exemple 32° de volant moteur.

Pendant cette fenêtre de mesure de bruit le signal transmis par le conducteur 31 branche directement, par l'intermédiaire du commutateur 34, l'intégrateur 15 sur la sortie du redresseur 13. Le losange suivant 212 matérialise l'attente de la fin de la fenêtre qui survient à l'arrivée d'un signal de niveau logique bas sur le conducteur 31 de la figure 1. A la réception de ce signal, l'étape suivante 213 est déclenchée. Elle correspond au début de la rampe décroissante de l'intégrateur 15, c'est-à-dire que, par le commutateur 34, le générateur de courant constant 14 est connecté à 'entrée de l'intégrateur 15 et provoque la décharge du condensateur 42 qui s'est chargé précédemment. Par le conducteur 46 de sortie de la logique de commande 21 de la figure 1, on autorise par l'intermédiaire des portes logiques 35 et 36 à fonction ET les impulsions délivrées par l'oscillateur interne 22 à être comptabilisées dans le compteur 23 durant le temps où la valeur de charge du condensateur 42 l'intégrateur 15 est supérieure au seuil de comparaison donné à la sortie de l'étage 17. Le compteur 23 travaille alors en périodemètre afin d'apprécier la durée de décharge du condensateur 42 qui est la mesure de la tension maximale à laquelle il a été précédemment chargé et qui correspond à la valeur intégrée du bruit dans la fenêtre de mesure déterminée à partir de l'entrée 30. A l'étape suivant 214, la logique de commande 21 engage le calcul du seuil de cliquetis dans l'étage 27 du microcalculateur pendant le temps de décharge du condensateur 42. Le losange 215 correspond à l'attente de la fin de la mesure de la tension de bruit. Cette mesure, une fois terminée, permet le passage à l'étape 216 où la logique de commande 21 engage le calcul de la valeur de décalage dans l'étage 28 du microcalculateur 20. Ce calcul une fois terminé, lors de l'étape 217, la mise en mémoire 29 de la valeur de décalage qui vient d'être calculée en 28 s'effectue sous la commande de la logique 21. Le losange suivant 218 correspond à un test sur la détection du cliquetis. En effet, la dernière étape 219 correspond au calcul de la valeur moyenne de bruit dans l'étape 24 du microcalculateur 20 et ce calcul ne s'effectue pas s'il y a eu détection de cliquetis. En présence de cliquetis, cette dernière étape 219 est supprimée.

La figure 3 est un organigramme illustrant le fonctionnement de l'étage de calcul 24 de la valeur moyenne de bruit à l'intérieur du microcalculateur 20. Cet étage de calcul 24 comporte une mémoire de stockage 240 de la valeur moyenne de bruit $\overline{S_{n-1}}$ et une mémoire de stockage 241 de la valeur instantanée de bruit $A_i$, toutes deux connectées par leurs sorties en parallèle sur les entrées d'un étage 242 dans lequel s'effectue le calcul de la différence $A_i - \overline{S_{n-1}}$. Suivant le signe de cette différence qui apparaît sur un conducteur de sortie 247, un étage 244 sélectionne une valeur $k$ de diviseur introduite dans un étage 243 appelé module de division qui est raccordé également à la sortie de l'étage 242 donnant la valeur de la différence $A_i - \overline{S_{n-1}}$. Le module de division 243 est connecté par sa sortie à un étage 245 dans lequel s'effectue le calcul de la nouvelle valeur de bruit suivant la formule:

$$\overline{S_n} = \overline{S_{n-1}} + \frac{A_i - \overline{S_{n-1}}}{k} \qquad (1)$$

Cet étage 245 est connecté par le conducteur 247 à la sortie de l'étage 242 dans lequel a été effectué le calcul de la différence $A_i - \overline{S_{n-1}}$ pour en recevoir le signe et également à la mémoire de stockage 240 par l'intermédiaire de la liaison 248 pour recevoir la valeur moyenne de bruit précédente $\overline{S_{n-1}}$.

L'étage de calcul 24 se termine par un étage 246 représentant une étape au cours de laquelle la nouvelle valeur moyenne $\overline{S_n}$ qui vient d'être calculée est stockée dans la mémoire 240 en prévision du calcul suivant.

La figure 4 est un organigramme donnant le détail de l'étage de calcul 27 de la valeur de seuil de cliquetis à l'intérieur du microcalculateur 20. Ce nouvel étage de calcul comprend tout d'abord une mémoire 240 de la valeur moyenne de bruit qui est celle utilisée à l'étage de calcul précédent 24. La mémoire 240 est connectée par sa sortie à l'entrée d'un étage 271 dans lequel s'effectue la multiplication $k_3 \cdot \overline{S_{n-1}}$, puis de l'étage 271, on passe à l'étage 272 où l'on ajoute la valeur $k_2$ à la quantité précédemment calculée. L'étage de calcul 27 se termine par une mémoire 275 de stockage de la valeur C de seuil de cliquetis qui répond donc à l'équation:

$$C = k_3 \cdot \overline{S_{n-1}} + k_2 \qquad (2)$$

dans laquelle $k_2$ est une valeur de décalage et $k_3$ un coefficient multiplicateur.

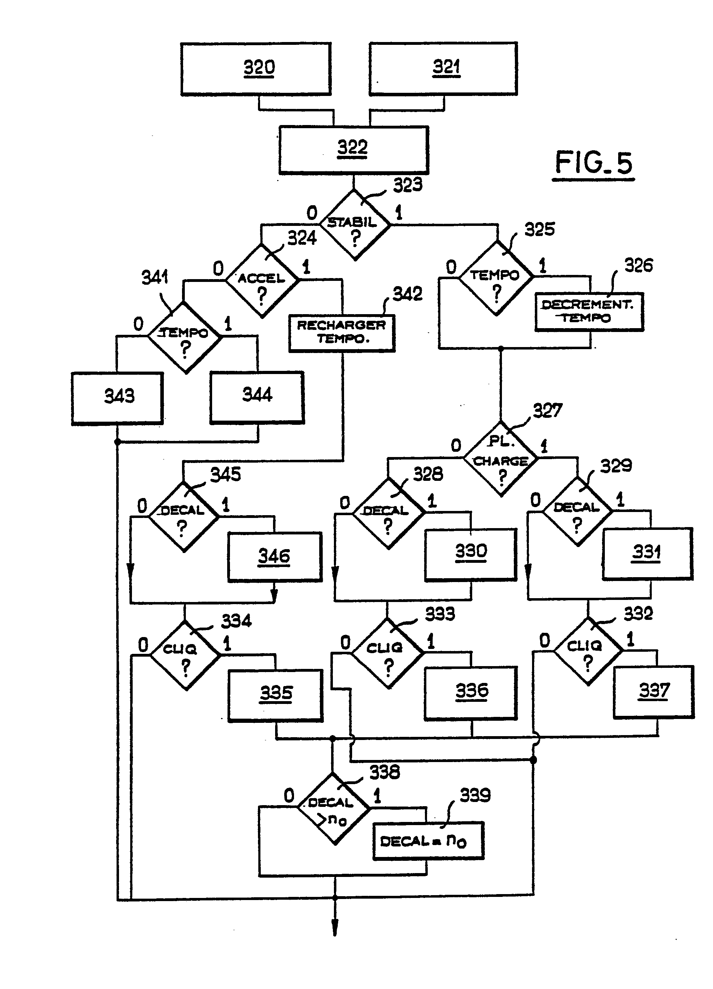

La figure 5 est un organigramme de l'étage de calcul 28 de la valeur de correction du décalage à l'intérieur de microcalculateur 20 appliquant une stratégie en fonction de la pression, du cliquetis et du cycle de fonctionnement dans lequel on se trouve, à savoir: accélération, décélération, régime à charge stabilisée ou non, régime de charge partielle ou de pleine charge. On part d'une position de mémoire 320 où l'on a mémorisé la mesure de la pression du cycle précédent et d'une position de mémoire 321 indiquant la mesure de la pression du cycle de calcul et de mise en mémoire en vue du cycle suivant. Ces deux mémoires 320 et 321 sont connectées par leurs sorties comme entrées à un étage 322 dans lequel se calcule la différence de pression entre les deux mesures précédentes, valeur à partir de laquelle s'élabore la stratégie. On examine au poste 323 s'il y a stabilité dans la régime de pression, c'est-à-dire si la différence de pression en valeur absolue est inférieure à un seil $p_1$: si oui, on passe à droite du losange 323, sinon on passe à gauche. Supposons que l'on constate en 323 que la pression n'est pas stable. On examine alors au poste 324 si l'on est en régime d'accélération. Dans l'affirmative, on passe au poste 342 où l'on recharge à la valeur $m_0$ la durée de la temporisation mémorisant l'accélération. On mémorise ainsi une accélération à l'aide d'un monostable numérique situé dans une mémoire de temporisation de l'étage de calcul 28.

A titre d'exemple, la valeur $m_0$ varie de 400 à 800 coups d'allumage. On passe alors au losange 345 au niveau duquel s'effectue le test DECALAGE: savoir si oui ou non il y a décalage de l'avance. S'il y a effectivement décalage, on passe au poste 346 où l'on décrémente le décalage tous les $m_1$ allumages, $m_1$ étant une valeur numérique comprise entre 150 et 300. On parvient ensuite au test de CLIQUETIS en 334 auquel on parvient directement si le test DECAL en 345 donne un résultat nul. Si le test 334 est positif on passe à l'opération 335 au cours de laquelle on augmente tous les décalages de la quantité $n_1$, $n_1$ étant une valeur numérique comprise entre 6 et 8. Après quoi on fait un second test sur DECAL pour déterminer une valeur maximale de décalage $n_0$ en 338. Si le test se révèle positif, on parvient en 339 où l'opération consiste à ramener le décalage à $n_0$ valeur maximale, après quoi le présent cycle est terminé.

Si les tests 334 et 338 ont révélé un résultat négatif, on sort de l'organigramme. Si le test 324 n'a pas révélé d'accélération, on passe au test 341 sur la TEMPORISATION.

A l'aide du registre TEMP, on mémorise temporairement une accélération transitoire, ce qui peut faciliter le fonctionnement du moteur en le soulageant pour le futur immédiat. En effet, si l'on imagine de la part du conducteur le scénario de conduite suivant: il accélère et provoque du cliquetis; immédiatement après il relâche le pied pour changer de vitesse puis accélère à nouveau; le moteur profite alors une seconde fois de la correction établie lors de l'accélération précédente pour franchir le cap de la seconde accélération sans cliquetis.

Le registre TEMPO correspond à un monostable numérique qui est décrémenté sitôt que l'on n'est pas en accélération. Le registre TEMPO est un monostable numérique qui est mis à son maximum par une accélération et qui permet d'inhiber toute opération de remise à zéro de décalage quand on est en régime de décélération.

Si le test sur TEMPO est positif, on passe en 344 où l'opération consiste à décrémenter le registre de TEMPO à chaque allumage. Si le test 341 donne un résultat nul, on passe en 343 où l'opération consiste à ramener à zéro tous les décalages. Les opérations 343 et 344 ont une sortie commune qui les amène directement à la fin de l'organigramme. On a passé en revue la stratégie suivie quand le test 323 à révélé une instabilité dans le régime de la pression. On passe à présent à l'examen de la stratégie quand le test 323 révéle que la pression est stable. On quitte le losange 323 sur sa droite pour parvenir au test 325 sur la TEMPO. Si celle-ci n'est pas nulle, on en vient à l'opération 326 qui consiste à décrémenter la TEMPO comme à l'opération 344. La sortie de l'opération 326 rejoint la sortie gauche du test 325, cas où la TEMPO est nulle, et cette commune amène au test 327 consistant à voir si oui ou non le moteur à combustion interne fonctionne à pleine charge. Du résultat découlent deux stratégies légèrement différentes quoique suivant des chemins parallèles.

Ces deux stratégies de fonctionnement en charge stabilisée diffèrent de la stratégie de fonctionnement en charge non stabilisée. En effet, dans les deux premiers cas on est en régulation d'avance à proximité du cliquetis et les corrections ne s'effectuent que sur le cylindre dont on vient de mesurer le bruit; dans l'autre cas la correction d'avance porte sur tous les cylindres.

Supposant que l'on est effectivement en pleine charge, le test 329 établit si oui ou non il y a DECALAGE de l'avance à l'allumage. Si l'on constate qu'il y a effectivement décalage, l'opération 331 consiste à décrémenter le décalage tous les $m_3$ allumages, $m_3$ est une quantité numérique dont la valeur est comprise entre 1 000 et 2 000. La sortie de l'opération 331 rejoint la sortie gauche du test 329 dans le cas où l'on constate un décalage nul et l'on passe alors au test 332 pour déterminer si oui ou non il y a CLIQUETIS. Dans l'affirmative, on passe à l'opération 337 qui consiste à augmenter le DECALAGE pour le cylindre considéré de la quantité $n_3$, valeur positive égale à un ou deux. A la sortie de l'opération 337 on passe au test 338 déjà rencontré précédemment au cours duquel on détermine la valeur maximale du décalage. Si le test 332, comme le test 334 précédemment rencontré, permet d'établir qu'il n'y a pas cliquetis, le présent cycle est terminé.

Si le test 327 sur la PLEINE CHARGE a révélé que l'on n'est pas dans cette condition, on passe à gauche au test 328 pour déterminer si, oui ou non, il y a DECALAGE. Si l'on constate qu'il y a effectivement décalage, l'opération 330 consiste à décrémenter ce décalage tous les $m_2$ allumages, $m_2$ est une quantité numérique dont la valeur est comprise entre 400 et 800. La sortie de l'opération 330 rejoint la sortie gauche du test 328 dans le cas où l'on constate un décalage nul et l'on passe alors au test 333 pour déterminer si oui ou non il y a CLIQUETIS. Dans l'affirmative, on passe à l'opération 336 qui consiste à augmenter le décalage pour le cylindre considéré de la quantité $n_2$, valeur positive pouvant aller de trois à cinq. A la sortie de l'opération 336 on passe au test 338 déjà rencontré précédemment au cours duquel on détermine la valeur maximale du décalage. Si le test 333, comme les tests 332 et 334 déjà rencontrés, permet d'établir qu'il n'y a pas cliquetis, le présent cycle est terminé.

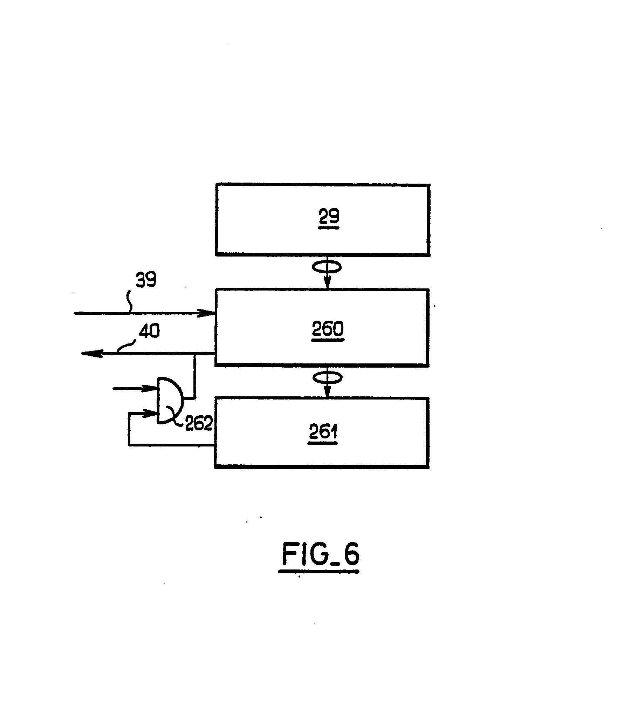

La figure 6 représente un mode de réalisation de l'étage de sortie 26 du calculateur 20. Cet étage 26 travaillant suivant un mode de fonctionnement par interruption externe n'est pas signalé dans l'organigramme de la figure 2 car son emplacement n'est pas défini dans la succession des tâches logiques mais est défini par le calculateur principal d'avance à l'allumage lors du besoin d'une valeur de décalage corrigée. On retrouve les conducteurs 39 et 40 représentés déjà à la figure 1. Le conducteur 39 appelé conducteur d'envoi parvient à l'entrée de chargement d'un décompteur 260 relié par ses entrées à une mémoire 29 de la valeur de décalage et par ses sorties à un détecteur de zéro 261. La sortie de ce dernier est reliée à une entrée d'une porte logique 262 à fonction ET dont la seconde entrée reçoit les impulsions engendrées par l'horloge interne du microcalculateur 20. La sortie de cette porte ET 262 est reliée à l'entrée horloge du décompteur 260 qui est en liaison également pour le conducteur 40 avec la sortie du microcalculateur 20 qui transmet la valeur de décalage au calculateur principal d'angle d'avance à l'allumage.

**Revendications**

1. Procédé de correction électronique de l'angle d'avance à l'allumage d'un moteur à combustion interne au moyen de la détection de signaux de bruit de combustion à l'aide d'un capteur tel qu'un accéléromètre rigidement fixé à la culasse du moteur, suivant lequel on fait subir au signal accélérométrique un traitement analogique comportant notamment l'intégration dans une fenêtre angulaire de mesure de largeur déterminée pour en déduire une valeur $A_i$ du signal de bruit intégré dans ladite fenêtre de mesure, caractérisé en ce qu'on calcule, pour chaque cylindre, une valeur moyenne $\overline{S}_n$ de bruit intégré du moteur à partir des valeurs de bruit $A_i$ relatives au cylindre considéré, ladite valeur moyenne $\overline{S}_n$ bruit intégré étant constamment réactualisée par la dernière valeur prélevée, suivant la formule:

$$\overline{S}_n = \overline{S_{n-1}} + \frac{A_i - S_{n-1}}{k} \qquad (1)$$

dans laquelle $\overline{S_{n-1}}$ est la valeur moyenne précedente; $A_i$ est la dernière valeur prélevée du bruit intégré; $k$ est un coefficient de filtrage numérique de réactualisation de la valeur moyenne;
on définit pour le cylindre considéré un seuil de détection de cliquetis C par la formule:

$$C = k_3 \cdot \overline{S_{n-1}} + k_2$$

dans laquelle: $k_3$ est coefficient multiplicateur et $k_2$ une valeur de décalage;
on compare la dernière valeur de bruit intégré $A_i$ au seuil de détection de cliquetis C défini à partir de la valeur $\overline{S_{n-1}}$ relative au cylindre considéré,
on corrige, en fonction du résultat de la comparaison précédente, le point d'avance à l'allumage du cylindre considéré,
on prend pour le coefficient $k$ dans la formule (1) une valeur comprise entre 4 et 10 lorsque la dernière valeur $A_i$ est inférieure à la valeur moyenne $\overline{S_{n-1}}$,
on prend $k$ égal à 2 ou 3 dans la formule (1) lorsque la dernière valeur $A_i$ est comprise entre la valeur moyenne $\overline{S_{n-1}}$ et le seuil de détection de cliquetis C,
et l'on s'abstient de calculer une nouvelle valeur moyenne $\overline{S}_n$ lorsque la dernière valeur $A_i$ est supérieure au seuil de détection de cliquetis C.

2. Procédé de correction électronique suivant la revendication 1, caractérisé en ce que l'on détermine si le moteur est en phase d'accélération, en phase de décélération, en régime stabilisé à pleine charge ou en régime stabilisé à charge partielle, et

— lors de la détection de cliquetis, on augmente la valeur de décalage du point d'avance d'allumage:
. d'une première valeur en phase d'accélération,
. d'un deuxième valeur inférieure à la première en régime stabilisé à charge partielle,
. d'un troisième valeur inférieure à la deuxième en régime stabilisé à plaine charge,
— on procède à un écrêtage de la valeur de décalage qui ne peut dépasser une valeur maximale,
— en l'absence de détection de cliquetis, on diminue la valeur de décalage du point d'avance à l'allumage:
. d'une première valeur en phase d'accélération,

. d'une deuxième valeur inférieure à la première en régime stabilisé à charge partielle,
. d'une troisième valeur inférieure à la deuxième en régime stabilisé à pleine charge,
— et l'on remet à zéro la valeur de décalage dans les phases de décélération.

3. Procédé de correction électronique suivant la revendication 2, caractérisé en ce que, pour déterminer l'état de fonctionnement du moteur, on mesure et on mémorise la pression dans le collecteur d'admission à chaque cycle, on effectue une différenciation, par rapport à la valeur mémorisée du cycle précédent, on en déduit que l'on est en accélération si la dérivée est positive, en décélération si la dérivée est négative et en régime stabilisé si la dérivée est nulle, on compare la valeur mesurée de la pression à un seuil fixe et l'on déduit que l'on est en fonctionnement à pleine charge ou en charge partielle en fonction du résultat de ladite comparaison.

4. Procédé de correction électronique suivant l'une quelconque des revendications 2 et 3, caractérisé en ce que, lors de la détection du cliquetis, on augmente la valeur de décalage de tous les cylindres en phase d'accélération et du seul cylindre considéré en régime stabilisé.

5. Procédé de correction électronique suivant l'une quelconque des revendications 2 à 4, caractérisé en ce que l'on déclenche une temporisation lors de chaque accélération qui bloque la remise à zéro des valeurs de décalage lors des phases de décélération suivant immédiatement une phase d'accélération.

6. Procédé de correction électronique suivant l'une quelconque des revendications 2 à 5, caractérisé en ce qu'à la suite de l'augmentation initiale de la valeur de décalage inhérente à la détection de cliquetis, la correction ultérieure de l'angle d'avance à l'allumage s'effectue toujours dans le sens d'une diminution de celui-ci.

7. Procédé de correction électronique suivant l'une quelconque des revendications 1 à 6, caractérisé en ce que le seuil de cliquetis est choisi à la limite inférieure des coups de bruit élevé lors d'un fonctionnement du moteur à pleine charge.

8. Correcteur électronique d'angle d'avance à l'allumage en fonction du cliquetis et de la charge d'un moteur à combustion interne, spécialement conçu pour la mise en oeuvre du procédé selon les revendications 1 à 7, comportant un capteur (10) tel qu'un accéléromètre fixé rigidement à la culasse du moteur, des moyens (11—17) de traitement analogique du signal prélevé sur l'accéléromètre (10), ces moyens de traitement analogique comprenant un intégrateur (15) recevant le signal accélérométrique, un circuit (17) générateur d'une valeur de seuil et un comparateur (16) de niveau de tension, ledit correcteur comprenant en outre des moyens logiques (30—31) pour commander le fonctionnement de l'intégrateur (15) à l'intérieur d'une fenêtre angulaire de mesure, et un microcalculateur (20) qui calcule la valeur de décalage de l'angle d'avance à l'allumage en fonction de l'état de sortie du comparateur (16), caractérisé en ce que l'intégrateur (15) comprend une capacité d'intégration (42) dans laquelle est mémorisé le signal de bruit détecté à partir de l'accéléromètre (10) et qui est ensuite déchargée par un système à courant constant (14), en ce que le microcalculateur (20) comprend un oscillateur interne (22), un compteur (23) qui comptabilise les impulsions émises par l'oscillateur interne (22) durant le temps où la valeur de charge de la capacité (42) est supérieure à la valeur de seuil engendrée par le circuit (17), le contenu dudit compteur (23) étant représentatif de la valeur $A_l$ du signal de bruit intégré dans la fenêtre de mesure, un étage (24) de calcul de la valeur moyenne de bruit intégré $\bar{S}_n$; un étage (27) de calcul du seuil de détection de cliquetis C, un étage (28) de calcul de la valeur de correction de décalage de l'angle d'avance à l'allumage, un étage (29) de mémorisation de la valeur de correction de décalage et un étage de sortie (26) recevant les valeurs successives de correction de décalage calculées par le microcalculateur, et en ce que le compteur (23) est relié soit à un capteur de pression (32), soit à l'oscillateur interne (22) par un ensemble de portes logiques (35—38) à fonction ET et OU.

9. Correcteur électronique d'angle d'avance à l'allumage suivant la revendication 8 lorsqu'elle dépend de la revendication 3, caractérisé en ce que ledit ensemble de portes logiques (35 à 38) permet audit compteur interne (23) de comptabiliser les impulsions délivrées par le capteur de pression (32) pendant la durée de ladite fenêtre de mesure et de comptabiliser les impulsions délivrées par l'oscillateur interne (22) durant le temps où la charge de ladite capacité (42) est supérieure à la valeur de seuil engendrée par le circuit (17), et en ce que l'étage de calcul (28) de la valeur de correction du décalage comprend une première position de mémoire (320) dans laquelle est mémorisée la mesure de la pression du cycle précédent et une seconde position de mémoire (321) dans laquelle est mémorisée la mesure de la pression du cycle de calcul suivant, et en ce que ces deux positions sont connectées par leurs sorties à un étage (322) de calcul de la différence de pression entre les deux mesures.

10. Correcteur électronique d'angle d'avance à l'allumage suivant la revendication 9, caractérisé en ce que l'étage de calcul (28) de la valeur de correction du décalage comprend en outre un monostable numérique qui est mis à sa position maximale par une accélération et permet de surseoir à toute opération de remise à zéro du décalage si l'on se trouve en régime transitoire.

**Patentansprüche**

1. Verfahren zur elektronischen Korrektur des Zündverstellwinkels eines Verbrennungsmotors mittels der Feststellung von Verbrennungsklopfsignalen mit Hilfe eines Fühlers, wie z.B. eines sehr fest am Zylinderkopf befestigten Beschleunigungsmessers, bei dem das Beschleunigungssignal einer Analogverarbeitung unterworfen wird, die insbesondere die Integration in einem Rechteckmeßfenster vorgegebener Breite aufweist um daraus einen Wert $A_l$ des integrierten Klopfsignals in diesem Meßfenster abzuleiten, dadurch gekennzeichnet, daß für jeden Zylinder ein mittlerer integrierter Motorklopfwert $\bar{S}_n$ berechnet wird ausgehend von den Klopfwerten $A_l$ für den betrachteten Zylinder, wobei der mittlere integrierte Klopfwert $\bar{S}_n$ ständig durch den letzten ermittelten Wert aktualisiert wird, gemäß der Formel

$$\bar{S}_n = \bar{S}_{n-1} + \frac{A_l - \bar{S}_{n-1}}{k} \qquad (1)$$

in der $\bar{S}_{n-1}$ der vorhergehende mittlere Wert ist;
$A_l$ der letzte ermittelte integrierte Klopfwert ist, und
k ein numerischer Filterkoeffizient der Aktualisierung des mittleren Wertes ist;
für den betrachteten Zylinder eine Klopfmeßschwelle C definiert wird gemäß der Formel

$$C = k_3 \cdot \bar{S}_{n-1} + k_2$$

in der $k_3$ ein Multiplikationskoeffizient und $k_2$ ein Verschiebewert ist;
der letzte integrierte Klopfwert A mit der Klopfmeßschwelle C verglichen wird, die ausgehend von dem zum betrachteten Cylinder gehörenden Wert $\bar{S}_{n-1}$ bestimmt ist,
der Vorzündungspunkt des betrachteten Zylinders als Funktion des Ergebnisses des vorhergehenden Vergleichs korrigiert wird,
für den Koeffizienten k in der Formel (1) ein Wert gewählt wird, der zwischen 4 und 10 liegt, wenn der letzte Wert $A_l$ kleiner als der mittlere Wert $\bar{S}_{n-1}$ ist, für k gleich 2 oder 3 in der Formel (1) gewählt wird, wenn der letzte Wert $A_l$ zwischen dem mittleren Wert $\bar{S}_{n-1}$ und der Meßwertschwelle C liegt,
kein neuer mittlerer Wert $\bar{S}_n$ berechnet wird, wenn der letzte Wert $A_l$ größer als die Klopfmeßschwelle C ist.

2. Verfahren zur elektronischen Korrektur nach Anspruch 1, dadurch gekennzeichnet, daß festgestellt wird, ob der Motor in der Beschleunigungsphase, in der Verzögerungsphase, im stabilen Betrieb bei Vollast oder im stabilen Betrieb bei Teillast ist und daß während des Feststellens des Klopfens der Verschiebewert für den Zündverstellungspunkt erhöht wird:

. um einen ersten Wert während der Beschleunigungsphase,
. um einen zweiten Wert, der kleiner als der Erste ist während des stabilen Betriebs bei Teillast,
. um einen dritten Wert, der kleiner als der Zweite ist während des stabilen Betriebs bei Vollast,
— eine Begrenzung des Verschiebewerts durchgeführt wird, der einem Maximalwert nicht überschreiten kann,
— daß bei Nichtfeststellen des Klopfens der Verschiebewert für den Zündverstellpunkt verringert wird:

. um einen ersten Wert während der Beschleunigungsphase,

. um einen zweiten Wert, der kleiner als der Erste ist während des stabilen Betriebs bei Teillast,

. um eine dritten Wert, der kleiner als der Zweite ist während des stabilen Betriebs bei Vollast,

— und daß der Verschiebewert auf Null zurückgestellt wird während der Verzögerungsphasen.

3. Verfahren zur elektronischen Korrektur nach Anspruch 2, dadurch gekennzeichnet, daß zur Feststellung der Betriebsweise des Motors der Druck im Ansaugsammler bei jedem Zyklus gemessen und gespeichert wird, daß eine Differentiation bezüglich des gespeicherten Wertes des vorhergehenden Zyklus durchgeführt wird, daß daraus eine Beschleunigung abgeleitet wird, wenn die abgeleitete Funktion positiv ist, eine Verzögerung, wenn die abgeleitete Funktion negativ ist und ein stabiler Betrieb, wenn die abgeleitete Funktion gleich Null ist, daß der gemessene Druckwert mit einer festen Schwelle verglichen wird und daß daraus als Funktion des Resultats dieses Vergleiches ein Vollastbetrieb oder ein Teillastbetrieb abgeleitet wird.

4. Verfahren zur elektronischen Korrektur nach einem der Ansprüche 2 und 3, dadurch gekennzeichnet, daß während des Feststellens des Klopfens der Wert der Verschiebung erhöht wird für alle Zylinder in der Beschleunigungsphase und des einzigen im stabilen Betrieb betrachteten Zylinders.

5. Verfahren zur elektronischen Korrektur nach einem der Ansprüche 2 bis 4, dadurch gekennzeichnet, daß während jeder Beschleunigung eine Verzögerung ausgelöst wird, die das Zurückstellen auf Null der Verschiebewerte verhindert während der Verzögerungsphasen, die unmittelbar einer Beschleunigungsphase folgen.

6. Verfahren zur elektronischen Korrektur nach einem der Ansprüche 2 bis 5, dadurch gekennzeichnet, daß als Folge der Anfangserhöhung des Wertes der Verschiebung in Folge des Feststellens des Klopfens die nachfolgende Korrektur des Zündverstellwinkels immer in Richtung seiner Verkleinerung erfolgt.

7. Verfahren zur elektronischen Korrektur nach einem der Ansprüche 1 bis 6, dadurch gekennzeichnet, daß die Klopfschwelle an der unteren Grenze der starken Klopfgeräusche bei einem Vollastbetrieb des Motors gewählt ist.

8. Elektronische Vorrichtung zur Korrektor des Zündverstellwinkels in Abhängigkeit des Klopfverhaltens und der Belastung eines Verbrennungsmotors, insbesondere ausgestaltet zur Durchführung des Verfahrens nach den Ansprüchen 1 bis 7, mit einem Fühler (10), wie z.B. einem Beschleunigungsmesser, der sehr fest an dem Zylinderkopf des Motors befestigt ist, mit Anordnungen (11 bis 17) zur Analogverarbeitung des am Beschleunigungsmessers (10) abgenommenen Signals, wobei diese Anordnungen zur Analogverarbeitung einen Integrierer (15) aufweisen, dem das Beschleunigungssignal zugeführt wird, einen Schaltkreis (17) zur Erzeugung eines Schwellwertes und einen Vergleicher (16) für den Spannungspegel, wobei die Vorrichtung außerdem logische Anordnungen (30 bis 31) aufweist um den Betrieb des Integrierers (15) im Inneren eines Rechteckmeßfensters zu steuern, sowie einen Mikrorechner (20), der den Verschiebewert für den Zündverstellwinkel als Funktion des Ausgangszustandes des Vergleichers (16) errechnet, dadurch gekennzeichnet, daß der Integrierer (15) einen Integrierkondensator (42) aufweist, in dem das vom Beschleunigungsmesser (10) gemessene Klopfsignal gespeichert ist und der anschließend von einer Gleichstromanordnung (14) entladen ist, daß der Mikrorechner (20) einen internen Oszillator (22) aufweist, einen Zähler (23), der die vom internen Oszillator (22) abgegebenen Impulse zählt während der Zeit, wo der Ladewert des Kondensators (42) oberhalb des vom Schaltkreis (17) erzeugten Schwellwertes ist, wobei der Inhalt des Zählers (23) den Wert $A_I$ des im Meßfenster integrierten Klopfsignals darstellt, eine Rechnerstufe (24) für den mittleren integrierten Klopfwert $\bar{S}_n$; eine Rechnerstufe (27) für die Klopfmeßschwelle C, eine Rechnerstufe (28) für den Korrekturwert der Verschiebung des Zündverstellwinkels, eine Speicherstufe (29) für den Korrekturwert der Verschiebung und eine Ausgangsstufe (26) zur Aufnahme der aufeinanderfolgenden vom Mikrorechner errechneten Korrekturwerte der Verschiebung und daß der Zähler (23) entweder mit einem Druckfühler (32) oder mit dem internen Oszillator (22) über eine Anordnung aus logischen UND- und ODER-Torschaltungen (35 bis 38) verbunden ist.

9. Elektronische Vorrichtung zur Korrektur des Zündverstellwinkels nach Anspruch 8, wenn diese von Anspruch 3 abhängt, dadurch gekennzeichnet, daß die Anordnung von logischen Torschaltungen (35 bis 38) dem internen Zähler (23) das Zählen der vom Druckfühler (32) stammenden Impulse ermöglicht während der Dauer des Meßfensters und das Zählen der vom internen Oszillator (22) stammenden Impulse ermöglicht während der Zeit, wo die Ladung des Kondensators (42) größer als der vom Schaltkreis (17) erzeugte Schwellwert ist und daß die Rechnerstufe (28) für den Korrekturwert der Verschiebung einen ersten Speicherplatz (320) aufweist, in dem Die Druckmessung des vorhergehenden Zyklus gespeichert ist und einen zweiten Speicherplatz (321) aufweist, in welchem die Druckmessung des folgenden Rechenzyklus gespeichert wird und daß die beiden Plätze über ihre Ausgänge mit einer Rechnerstufe (322) für die Druckdifferenz zwischen den beiden Messungen verbunden sind.

10. Elektronische Vorrichtung zur Korrektur des Zündverstellwinkels nach Anspruch 9, dadurch gekennzeichnet, daß die Rechnerstufe (28) für den Korrekturwert der Verschiebung außerdem eine numerische monostabile Schaltung aufweist, die durch einen Beschleunigung ihre Maximalstellung einnimmt und die ein jegliches Rückstellen auf Null der Verschiebung verhindert im Übergangsbetrieb.

**Claims**

1. A process for electronic correction of the ignition advance angle of an internal combustion engine by means of detecting combustion noise signals by means of a detector such as an accelerometer which is rigidly fixed to the cylinder head of the engine, wherein the accelerometer signal is subjected to analog processing comprising in particular integration in an angular measuring window of given width to deduce therefrom a value $A_i$ of the noise signal integrated in said measuring window, characterised by calculating, for each cylinder, a mean value $\overline{S}_n$ of integrated noise of the engine from the noise values $A_i$ relating to the cylinder in question, said integrated noise mean value $\overline{S}_n$ being constantly up-dated by the last value detected, in accordance with the formula

$$\overline{S}_n = \overline{S_{n-1}} + \frac{A_i - \overline{S_{n-1}}}{k} \qquad (1)$$

wherein $\overline{S_{n-1}}$ is the previous mean value; $A_i$ is the last detected value of the integrated noise; and $k$ is a digital filtration coefficient for up-dating of the mean value;

defining for the cylinder in question a pinking detection threshold C by means of the formula:

$$C = k_3 \cdot \overline{S_{n-1}} + k_2$$

where $k_3$ is a multiplying coefficient and $k_2$ is a shift value;

comparing the last integrated noise value $A_i$ to the pinking detection threshold C defined as from the value $\overline{S_{n-1}}$ relating to the cylinder in question,

correcting the ignition advance point of the cylinder in question, in dependence on the result of the foregoing comparison operation,

taking for the coefficient $k$ in the formula (1) a value of from 4 to 10 when the last value $A_i$ is lower than the mean value $\overline{S_{n-1}}$,

taking $k$ equal to 2 or 3 in the formula (1) when the last value $A_i$ is between the mean value $\overline{S_{n-1}}$ and the pinking detection threshold C, and

refraining from calculating a fresh mean value $\overline{S}_n$ when the last value $A_i$ is higher than the pinking detection threshold C.

2. An electronic correction process according to claim 1 characterised by determining if the motor is in an acceleration phase, a deceleration phase, a stabilised operating condition under full load or a stabilised operating condition under partial load, and

— when pinking is detected, increasing the shift value of the ignition advance point:

. by a first value in an acceleration phase,

. by a second value which is lower than the first value in the stabilised operating condition under partial load,

. by a third value which is lower than the second value in the stabilised operating condition under full load,

— chopping the shift value which may not exceed a maximum value,

— when no pinking is detected, reducing the shift value of the ignition advance point:

. by a first value in an acceleration phase,

. by a second value which is lower than the first value in a stabilised operating condition under partial load,

. by a third value which is lower than the second value in a stabilised operating condition under full load, and

— resetting the shift value to zero in the deceleration phases.

3. An electronic correction process according to claim 2 characterised by, for determining the operating state of the engine, measuring and memorising the pressure in the intake manifold in each cycle, effecting a differentiation operation with respect to the memorised value of the preceding cycle, deducing therefrom that the engine is in an acceleration phase if the derivative is positive, in a deceleration phase if the derivative is negative and in a stabilised operating condition if the derivative is zero, comparing the measured value in respect of pressure to a fixed threshold, and deducing that the engine is in an operating condition under full load or under partial load in dependence on the result of said comparison operation.

4. An electronic correction process according to either one of claims 2 and 3 characterised by, when pinking is detected, increasing the shift value of all the cylinders in an acceleration phase and the single cylinder in question in a stabilised operating condition.

5. An electronic correction process according to any one of claims 2 to 4 characterised by triggering off a time delay upon each acceleration which blocks the resetting to zero of the shift values in deceleration phases immediately following an acceleration phase.

6. An electronic correction process according to any one of claims 2 to 5 characterised in that, following the initial increase in the shift value inherent in the detection of pinking, the subsequent correction in respect of the ignition advance angle is always effected in the direction of reducing same.

7. An electronic correction process according to any one of claims 1 to 6 characterised in that the pinking threshold is selected at the lower limit of the high level of knocking noises when the engine is operating under full load.

8. Apparatus for electronic correction of ignition advance angle in dependence on pinking and the load on an internal combustion engine, especially designed for carrying out the process according to claims 1 to 7, comprising a detector (10) such as an accelerometer which is rigidly fixed to the cylinder head of the engine, means (11—17) for analog processing of the signal obtained at the accelerometer (10), said analog processing means comprising an integrator (15) which receives the accelerometer signal, a circuit (17) for generating a threshold value and a voltage level comparator (16), said apparatus further comprising logic means (30—31) for controlling the operation of the integrator (15) within an angular measuring window, and a microcomputer (20) which calculates the shift value of the ignition advance angle in dependence on the output condition of the comparator (16), characterised in that the integrator (15) comprises an integration capacitor (42) in which is stored the detected noise signal from the accelerometer (10) and which is then discharged by a constant current system (14), that the microcomputer (20) comprises an internal oscillator (22), a counter (23) which keeps account of the pulses emitted by the internal oscillator (22) during the period of time for which the charge value of the capacitor (42) is higher than the threshold value generated by the circuit (17), the content of said counter (23) being representative of the value $A_I$ of the integrated noise signal in the measuring window, a stage (24) for calculating the mean value of integrated noise $\overline{S}_n$; a stage (27) for calculating the pinking detection threshold, a stage (28) for calculating the ignition advance angle shift correction value, a stage (29) for memorising the shift correction value and an output stage (26) receiving the successive shift correction values, calculated by the microcomputer, and that the counter (23) is connected either to a pressure detector (32) or to the internal oscillator (22) by an assembly of logic AND and OR gates (35—38).

9. An ignition advance angle electronic correction apparatus according to claim 8 when appendant to claim 3 characterised in that said assembly of logic gates (35 to 38) permits said internal counter (23) to account for the pulses delivered by the pressure detector (32) during the duration of said measuring window and to account for the pulses delivered by the internal oscillator (22) during the time when the charge of said capacitor (42) is higher than the threshold value generated by the circuit (17), and that the stage (28) for calculating the shift correction value comprises a first memory position (320) for storing the measurement of the pressure of the preceding cycle and a second memory position (321) for storing the measurement of pressure of the following calculation cycle, and that said two positions are connected by their outputs to a stage (322) for calculating the pressure difference between the two measurements.

10. An ignition advance angle electronic correction apparatus according to claim 8 characterised in that the stage (28) for calculating the shift correction value also comprises a digital monostable means which is set to its maximum position by an acceleration and which makes it possible to suspend any operation of resetting the shift to zero when in a transitional condition.

FIG_1

0 030 491

0 030 491

FIG.2

FIG.3

FIG.4

2

FIG.5

FIG_6